# EUROPEAN PATENT APPLICATION

(11) **EP 1 916 597 A1**
(43) Date of publication of application: **30.04.2008**
(21) Application number: 07119312.2
(22) Date of filing: 25.10.2007
(51) Int. Cl.: G06F 9/44

(54) **Apparatus and method for language translation of a toolkit menu**

(30) Priority: 25.10.2006 KR 20060104027
(71) Applicant: Samsung Electronics Co., Ltd., Suwon-si, Gyeonggi-do 442-743 (KR)
(72) Inventor: Venkateswarlu, Suraparaju, Gyeonggi-do (KR)
(74) Representative: Grünecker, Kinkeldey, Stockmair & Schwanhäusser Anwaltssozietät

(57) **Abstract**

A method for language translation of a toolkit menu is provided, which includes receiving, by a Subscriber Identity Module (SIM) toolkit module, the toolkit menu from a SIM card module, determining, by the SIM toolkit module, whether a language of the toolkit menu matches a user-defined language, and translating, by the SIM toolkit module, the language of the toolkit menu into the user-defined language, if the language of the toolkit menu is different from the user defined language.

## Description

The present invention relates generally to an apparatus and a method for language translation of a user menu such as a toolkit menu in a portable terminal, and in particular, to an apparatus and a method for translating language set in a Subscriber Identity Module (SIM) card into another language as defined by a user and displaying in the translated language, if the language of the SIM card is different from the user defined language.

A mobile communication system using a portable terminal has become an integral part of most people's everyday lives. As the number of world travelers has increased, requirements for global roaming of portable terminals have also increased.

Unlike the Code Division Multiple Access (CDMA) system, the Global System for Mobile Communications (GSM) mobile communication system uses a SIM card to store user authentication information such that user authentication is processed using the stored information, and the user is provided with the intended mobile communication service.

The SIM toolkit software module (hereinafter SIM toolkit module) is stored to the SIM card, and executed by a control unit after the portable terminal is booted. Basically, the SIM toolkit module receives from the SIM card the information about the service, which is generated by the service provider and contracted with the service provider so that a subscriber can use the information.

A portable terminal shows a foreign language, if a subscriber is currently traveling in a foreign country and uses a mobile communication service such as roaming service, using a network SIM card of the foreign country.

Accordingly, it is difficult for a user to operate the portable terminal. It is also highly likely that the user will operate the portable terminal incorrectly and inadvertently access the network, causing a waste of network resources.

An aspect of the present invention is to substantially solve at least the above problems and/or disadvantages and to provide at least the advantages below. Accordingly, the object of the present invention is to provide an apparatus and a method for language translation of a toolkit menu.

This object is solved by the subject matter of the independent claims.

Preferred embodiments are defined in the dependent claims.

An aspect of the present invention is to provide an apparatus and a method for displaying a toolkit menu in a user defined language, regardless of the language set in a SIM card of a portable terminal.

Another aspect of the present invention is to provide an apparatus an a method for displaying a toolkit menu in a user defined language, regardless of the language set in a SIM card of a portable terminal, thereby preventing user's erroneous use of the toolkit menu and subsequent unnecessary access to a network.

According to a first aspect of the present invention, a method for language translation of a toolkit menu comprising receiving, by a Subscriber Identity Module (SIM) toolkit module, the toolkit menu from a SIM card module, determining, by the SIM toolkit module, whether a language of the toolkit menu matches a user-defined language, and translating, by the SIM toolkit module, the language of the toolkit menu into the user-defined language, if the language of the toolkit menu is different from the user defined language.

According to a second aspect of the present invention, a method for language translation of a toolkit menu comprising, receiving, by a Subscriber Identity Module (SIM) toolkit module, the toolkit menu from a SIM card module, determining, by the SIM toolkit module, whether a language of the toolkit menu matches a user-defined language, requesting the SIM card module, by the SIM toolkit module, for translation of the language of the toolkit menu into the user-defined language, if the language of the toolkit menu is different from the user defined language, translating, by the SIM card module, the language of the toolkit menu into the user-defined language, and providing, by the SIM card module, the toolkit menu in the translated language to the SIM card module.

According to a third aspect of the present invention, an apparatus for language translation of a toolkit menu comprising, a Subscriber Identity Module (SIM) card module for providing the toolkit menu, translating the language of the toolkit menu into the user-defined language, and providing the toolkit menu in the translated language, and a SIM toolkit module for receiving the toolkit menu, determining whether a language of the toolkit menu matches a user-defined language, requesting translation of the language of the toolkit menu into the user-defined language, if the language of the toolkit menu is different from the user defined language, and receiving the toolkit menu in the translated language from the SIM card module.

According to a fourth aspect of the present invention, an apparatus for language translation of a toolkit menu comprising, a Subscriber Identity Module (SIM) card module for providing the toolkit menu, and a SIM toolkit module for receiving the toolkit menu, determining whether a language of the toolkit menu matches a user-defined language, and translating the language of the toolkit menu into the user-defined language if the language of the toolkit menu is different from the user defined language.

The above object and other aspects, features and advantages of the present invention will become more apparent from the following detailed description when taken in conjunction with the accompanying drawings in which:
FIG. 1 illustrates the process of translating language according to the present invention;
FIG. 2 illustrates the process of selecting a user- defined language according to the present invention;
FIG. 3 illustrates the process of translating into a user defined language according to the present invention;
FIG. 4 illustrates the process of translating into a user defined language according to the present invention; and
FIG. 5 illustrates a portable terminal according to the present invention.

Preferred embodiments of the present invention will be described herein below with reference to the accompanying drawings. In the following description, well-known functions or constructions are not described in detail for the sake of clarity and conciseness.

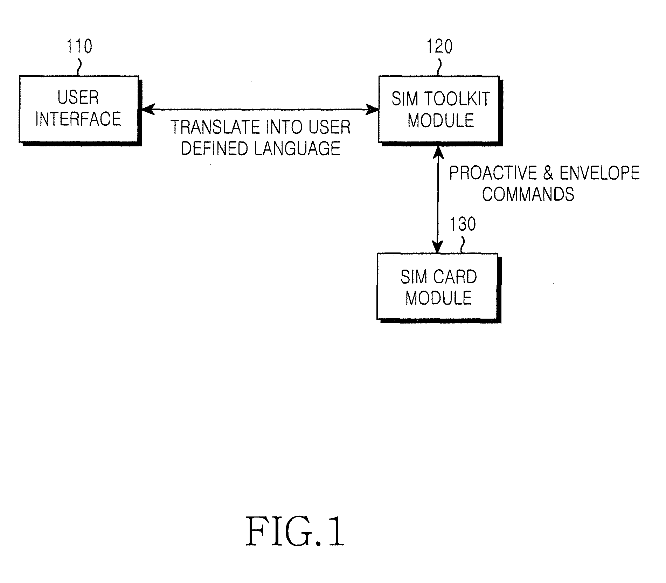

FIG. 1 illustrates the process of language translation according to the present invention.

Referring to FIG. 1, a user interface 110 displays a user menu, that is, displays a toolkit menu provided by a SIM toolkit module 120, receives a user input through an input unit, and provides the SIM toolkit module 120 with the received user input.

Accordingly, the SIM toolkit module 120 receives the toolkit menu from the SIM card module 130. If a toolkit menu language set in the SIM card module 130 is different from a previously set user defined language, the SIM toolkit module 120 translates the toolkit menu language into the user defined language and provides the user interface 110 with the translated language.

In particular, the alpha identifier and text sections of the toolkit menu are changed according to the language translation. Table 1 below lists the alpha identifier parts and text sections of the toolkit menu.

**Table 1**

| 1 Setup Menu | |
|---|---|
| | Alpha Identifier |
| | Item Data Text |
| | Text Attributes |

| 2 Select Item | |
|---|---|
| | Alpha Identifier |
| | Item Data Text |
| | Text Attributes |

| 3 Display Text | |
|---|---|
| | Text String |
| | Text Attributes |
| | |

In Table 1, "Setup menu" and "Select Item" are defined as alpha identifiers, and "Display Text" is defined as text (i.e., text string). As mentioned above, the alpha identifier and text sections of the toolkit menu are displayed, and if the language of these sections is different from the predetermined user defined language, the language is translated into the user defined language and provided to the user interface 110.

If the toolkit menu language set in the SIM card module 130 is different from the user defined language, the SIM toolkit module 120 notifies it to the SIM card module 130 such that the SIM card module 130 translates the toolkit menu language and provides the SIM toolkit module 120 with the translated language.

The SIM card module 130 transfers information to the SIM toolkit module 120, using proactive command format, and the SIM toolkit module 120 transfers information to the SIM card module 130, using envelope command format.

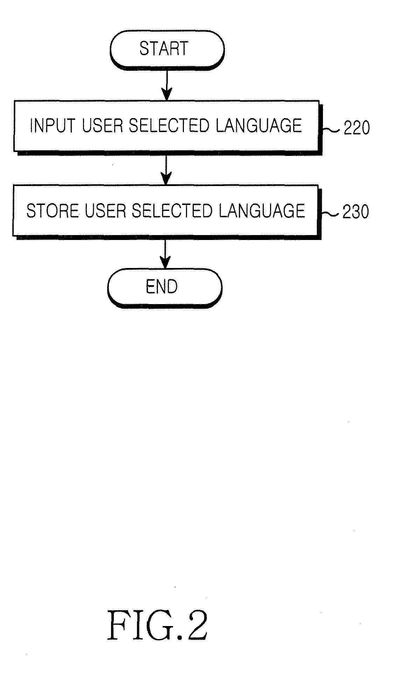

FIG. 2 illustrates the process of selecting a user- defined language according to the present invention.

Referring to FIG. 2, a portable terminal receives a user- defined language from a user in step 220. The portable terminal stores information about the user defined language in step 230.

The information about the user- defined language is stored to a storage unit, and may be used by the SIM toolkit module 120 or the SIM card module 130.

The algorithm according to the present invention is then terminated.

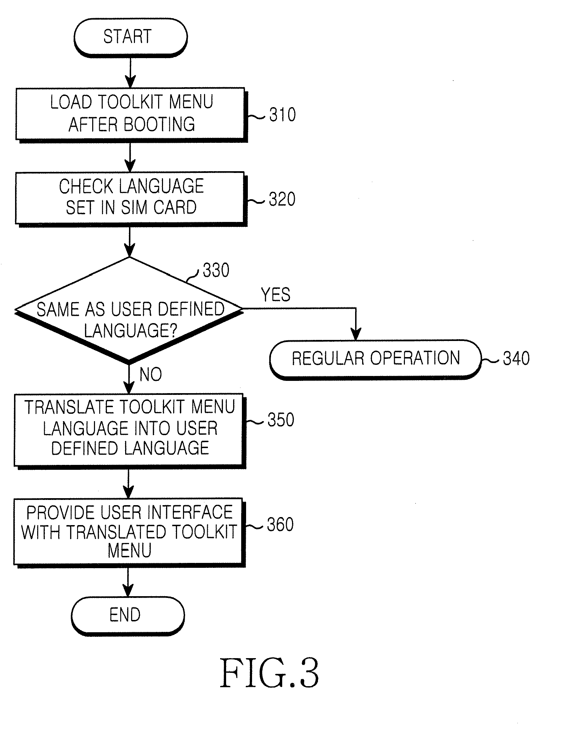

FIG. 3 illustrates the process of translating into a user- defined language according to the present invention.

Referring to FIG. 3, after the portable terminal is booted, in step 310, the SIM toolkit module 120 requests the SIM card module 130 for a user menu, that is, requests a toolkit menu, and loads the requested toolkit menu. The SIM toolkit module 120 checks language set in the SIM card in step 320.

In step 330, if the language set in the SIM card matches the predetermined user defined language, the SIM toolkit module 120 proceeds to step 340 and performs the regular course of operations including providing the user interface 110 with the toolkit menu, receiving a user input from the user interface 110 and carrying out the input command.

In step 330, if the language set in the SIM card is different from the predetermined user defined language, the SIM toolkit module 120 proceeds to step 350 and translates the language set in the SIM card into the predetermined user defined language.

The algorithm according to the present invention is then terminated.

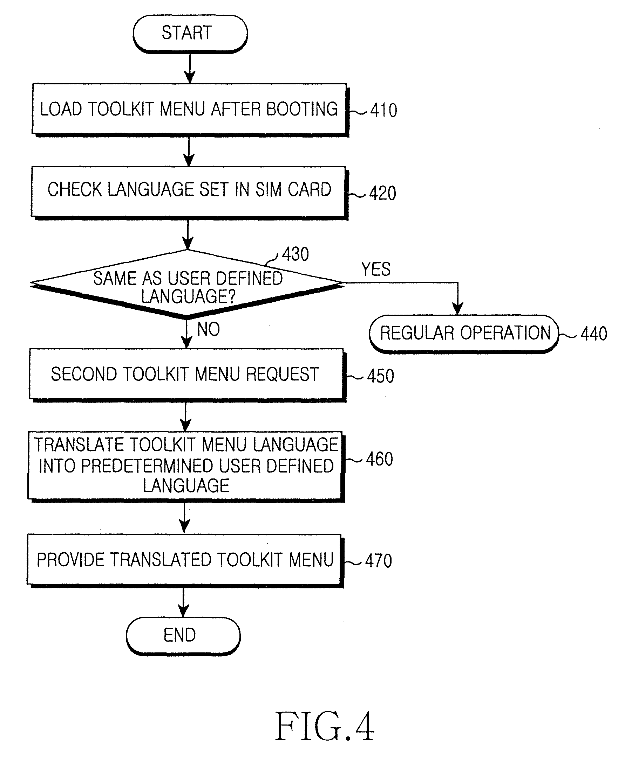

FIG. 4 illustrates the process of translating into a user- defined language according to the present invention.

Referring to FIG. 4, after the portable terminal is booted, the SIM toolkit module 120 in step 410 requests the SIM card module 130 for a user menu, that is, requests a toolkit menu and loads the requested toolkit menu. The SIM toolkit module 120 in step 420 then checks the language set in the SIM card.

In step 430, if the language set in the SIM card matches the predetermined user defined language, the SIM toolkit module 120 proceeds to step 440 and performs the regular course of operations including providing the user interface 110 with the toolkit menu, receiving a user input from the user interface 110 and carrying out the input command.

In step 430, if the language set in the SIM card is different from the predetermined user defined language, the SIM toolkit module 120 proceeds to step 450 and makes a second- request for the SIM card module 130 for a user menu, that is, for a toolkit menu. The second request of the SIM toolkit module 120 includes information about the user- defined language, which is the target language of the translation.

The SIM card module 130 in step 460 translates the language of the toolkit menu into the predetermined user defined language, and in step 470, provides the translated language to the toolkit menu, and the SIM toolkit module 120 provides the user interface 110 with the translated toolkit menu.

The algorithm according to the present invention is then terminated.

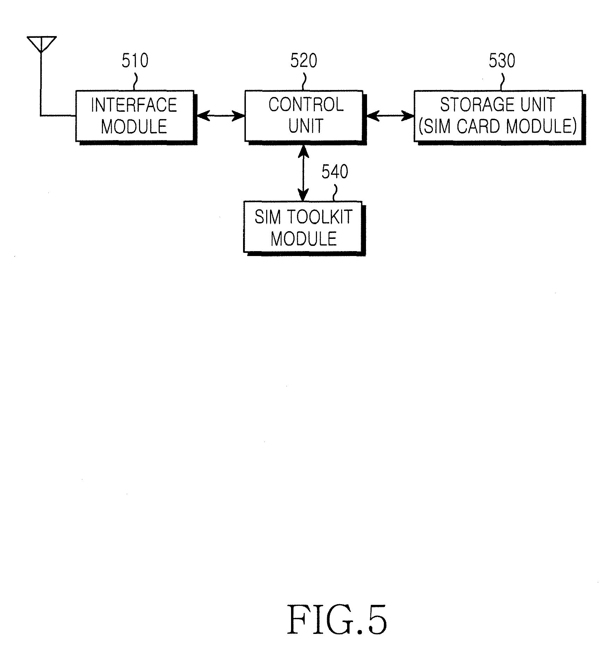

FIG. 5 illustrates a portable terminal according to the present invention.

Referring to FIG. 5, an interface module 510 is provided for communication with other nodes, and includes a Radio Frequency (RF) processing unit and a baseband- processing unit. The RF processing unit converts a signal received over an antenna into a baseband signal, provides the baseband- processing unit with the converted signal, converts a signal from the baseband- processing unit into an RF format to be transmitted over the air, and transmits the converted signal via the antenna.

A control unit 520 controls the overall operation of the portable terminal. For example, the control unit 520 may handle processing and controlling related with voice and data communications. According to the present invention, the control unit 520 may additionally control a SIM toolkit module 540 and a SIM card module 530 such that a language of the toolkit menu is translated into a user defined language, if the toolkit menu language set in the SIM card module 530 is different from the predetermined user defined language.

According to the instructions and information from the control unit 520, the SIM toolkit module 540 receives a user menu, that is, receives a toolkit menu from the SIM card module 530 after the portable terminal is booted, and translates a toolkit menu language set in the SIM card module 530 into a predetermined user defined language, if the toolkit menu language is different from the predetermined user defined language.

Alternatively, the SIM toolkit module 540 may receive a user menu, that is, a toolkit menu from the SIM card module 530 after the portable terminal is booted, and make a second request for the SIM card module 530 for a toolkit menu, if the language set in the received toolkit menu is different from the predetermined user defined language. The second request by the SIM toolkit module 540 includes information about the user- defined language, which is the target language of the translation. The SIM toolkit module 540 then receives the translated toolkit menu.

A storage unit 530 operates to store programs to control the overall operations of the apparatus according to a preferred embodiment of the present invention, and also temporary data generated during the executing of the programs. The storage unit 530 includes the SIM card module 530.

The SIM card module 530 provides the SIM toolkit module 540 with a user menu, that is, a toolkit menu. If the SIM card module 530 receives a request for a toolkit menu, which includes a request for a translation into user defined language, the SIM card module 530 translates the toolkit menu language into the user defined language and provides the SIM toolkit module 540 with the translated language.

The control unit 520, among the above-explained function blocks, may perform functions of the SIM toolkit module 540 and the SIM card module 530. Herein, it is only for illustrative purposes that the SIM toolkit module 540 and the SIM card module 530 are separately provided in the above examples. Accordingly, it is possible that the control unit 520 may be configured to perform all or part of the functions of the SIM toolkit module 540 and the SIM card module 530.

Alternate embodiments of the present invention can also comprise computer readable codes on a computer readable medium. The computer readable medium includes any data storage device that can store data that can be read by a computer system. Examples of a computer readable medium include magnetic storage media (such as ROM, floppy disks, and hard disks, among others), optical recording media (such as CD-ROMs or DVDs), and storage mechanisms such as carrier waves (such as transmission through the Internet). The computer readable medium can also be distributed over network coupled computer systems so that the computer readable code is stored and executed in a distributed fashion. Also, functional programs, codes, and code segments for accomplishing the present invention can be construed by programmers of ordinary skill in the art to which the present invention pertains.

Because the toolkit menu language is translated into a language defined by a user, user's inaccurate manipulation on the toolkit menu can be prevented, and accordingly, unintended consumption of network resources due to inaccurate manipulation of the toolkit menu can also be prevented.

While the invention has been shown and described with reference to certain preferred embodiments thereof, it will be understood by those skilled in the art that various changes in form and details may be made therein without departing from the scope of the invention as defined by the appended claims.

## Claims

1. A method for language translation of a toolkit menu, comprising:
receiving, by a Subscriber Identity Module, SIM, toolkit module, the toolkit menu from a SIM card module;
determining, by the SIM toolkit module, whether a language of the toolkit menu matches a user-defined language; and
if the language of the toolkit menu is different from the user-defined language, translating, by the SIM toolkit module, the language of the toolkit menu into the user-defined language.

2. The method of claim 1, further comprising maintaining the language of the toolkit menu by the SIM toolkit module, if the language of the toolkit menu matches the user-defined language.

3. The method of claim 1 or 2, wherein the toolkit menu is provided using a proactive command format.

4. The method of one of claims 1 to 3, wherein
the SIM toolkit module is adapted for requesting the SIM card module to perform the translation of the language of the toolkit menu into the user-defined language, if the language of the toolkit menu is different from the user-defined language.

5. The method of one of claims 1 to 4, further comprising:
translating, by the SIM card module, the language of the toolkit menu into the user-defined language; and
providing, by the SIM card module, the toolkit menu in the translated language to the SIM card module.

6. The method of one of claims 1 to 5, further comprising maintaining the language of the toolkit menu by the SIM toolkit module, if the language of the toolkit menu matches the user-defined language.

7. The method of one of claims 1 to 6, wherein the toolkit menu is provided using a proactive command format.

8. The method of one of claims 1 to 7, wherein the translation into the user-defined language is requested using an envelope command format.

9. An apparatus for language translation of a toolkit menu, comprising:
a Subscriber Identity Module, SIM, card module for providing the toolkit menu; and
a SIM toolkit module for receiving the toolkit menu, determining whether a language of the toolkit menu matches a user-defined language, and
translating the language of the toolkit menu into the user-defined language if the language of the toolkit menu is different from the user-defined language.

10. The apparatus of claim 9, wherein said SIM card module is adapted for translating the language of the toolkit menu into the user-defined language, and providing the toolkit menu in the translated language.

11. The apparatus of claim 9 or 10, wherein said SIM toolkit module is adapted for requesting the translation of the language of the toolkit menu into the user-defined language, if the language of the toolkit menu is different from the user-defined language, and for receiving the toolkit menu in the translated language from the SIM card module.

12. The apparatus of one of claims 9 to 11, wherein the SIM toolkit module maintains the language of the toolkit menu, if the language of the toolkit menu matches the user-defined language.

13. The apparatus of one of claims 9 to 12, wherein the toolkit menu is provided using a proactive command format.

14. The apparatus of one of claims 9 to 13, wherein the translation into the user-defined language is requested using an envelope command format.

15. A computer-readable recording medium having recorded thereon a program for language translation of a toolkit menu, comprising;
a first code segment for receiving the toolkit menu;
a second code segment for determining whether a language of the toolkit menu matches a user-defined language;
a third code segment for translating the language of the toolkit menu into the user-defined language, if the language of the toolkit menu is different from the user-defined language; and
a fourth code segment for maintaining the language of the toolkit menu, if the language of the toolkit menu matches the user-defined language.

16. The computer-readable recording medium of claim 15, adapted to perform according to the method of one of claims 1 to 8.
